(19) Europäisches Patentamt / European Patent Office / Office européen des brevets

(11) **EP 1 324 559 B1**

(12) **EUROPEAN PATENT SPECIFICATION**

(45) Date of publication and mention
of the grant of the patent:
**14.03.2007   Bulletin 2007/11**

(51) Int Cl.:
***H04L 27/34*** *(2006.01)*

(21) Application number: **02102896.4**

(22) Date of filing: **27.12.2002**

(54) **Spectral Power Management for Constrained Transmissions Using Constellation Shaping**

Spektrale Leistungsverwaltung für eine bedingte Übertragung mit Konstellationsumformung

Gestion de la puissance spectrale pour des transmissions contraintes utilisant la mise en forme de constellation

(84) Designated Contracting States:
**DE FR GB**

(30) Priority: **10.05.2002   US 144408**
**28.12.2001   US 343651 P**

(43) Date of publication of application:
**02.07.2003   Bulletin 2003/27**

(73) Proprietor: **TEXAS INSTRUMENTS**
**INCORPORATED**
**Dallas, Texas 75251 (US)**

(72) Inventors:
• **Ophir, Lior**
**46602, Herzlia (IL)**
• **Brecher, Liran**
**44100, Kfar-Saba (IL)**

(74) Representative: **Holt, Michael et al**
**Texas Instruments Limited**
**European Patents Department**
**800 Pavilion Drive**
**Northampton, NN4 7YL (GB)**

(56) References cited:
EP-A- 0 383 632      EP-A- 1 014 722
EP-A- 1 128 625      WO-A1-01/56182

• FORNEY JR G D: "TRELLIS SHAPING" IEEE TRANSACTIONS ON INFORMATION THEORY, IEEE INC. NEW YORK, US, vol. 38, no. 2 PT01, 1 March 1992 (1992-03-01), pages 281-300, XP000257683 ISSN: 0018-9448
• VEDAT EYUBOGLU M ET AL: "TRELLIS PRECODING: COMBINED CODING, PRECODING AND SHAPING FOR INTERSYMBOL INTERFERENCE CHANNELS" IEEE TRANSACTIONS ON INFORMATION THEORY, IEEE INC. NEW YORK, US, vol. 38, no. 2 PT01, 1 March 1992 (1992-03-01), pages 301-314, XP000257684 ISSN: 0018-9448

**Description**

FIELD OF THE INVENTION

The invention relates generally to frequency channel communications and, more particularly, to spectral power management in frequency channel communications.

BACKGROUND OF THE INVENTION

In various fields of communications, certain spectral requirements are imposed on transmitters due, for example, to regulatory limitations and/or interference considerations. In Home Phoneline networking (HomePNA), for example, these include: (1) FCC regulations, specifically part 15 (radiated emissions) and part 68 (conducted emissions), wherein the latter requires averaging the power over a period (time window) of 2uS; (2) avoidance of audible noise in POTS (when apparent), which imposes peak constraints that seem to match the ones of part 68; and (3) avoidance of interference with HAM RF, wherein it is assumed that transmitting below -80dBm/Hz in the HAM bands is sufficient.

Compatibility with FCC part 15 and 68 imposes constraints on the peak power, whereas the requirement to avoid interfering with HAM bands imposes requirements on the transmitted power in HAM bands (e.g. around 7MHz). In the HomePNA2.0 specification, the foregoing requirements were met by the following solutions: using a PSD mask that complies with the FCC regulations and the HAM RF egress restrictions; normalizing the transmitted signal constellation according to the peak power (outermost symbols) to follow peak constraints; and using notch filters in the transmitter to comply with the power restrictions in the HAM bands. Normalizing the signal constellation according to the outermost symbols can cause a loss of up to 5dB in large constellations. In the 256QAM constellation used in HPNA2.0, this imposes a loss of 4.23dB. Using notch filters in the transmitter can result in a transmitted pulse that suffers from ISI and a longer impulse response, which in turn might degrade noise performance, and enhance error propagation in the receiver.

There is set forth in European Patent Application EP 0383632 an arrangement for trellis coding within certain constellation boundary contstrants, however, it remains desirable to provide spectral power management schemes that avoid undesired effects such as described above.

The present invention provides apparatus and method as set forth in the claims.

BRIEF DESCRIPTION OF THE DRAWINGS

FIGURE 1 diagrammatically illustrates pertinent portions of exemplary embodiments of a transmitter for frequency channel communications according to the invention.
FIGURE 2 diagrammatically illustrates pertinent portions of a conventional receiver apparatus which is capable of communicating with the transmitter of FIGURE 1.
FIGURE 3 diagrammatically illustrates exemplary embodiments of the metric element of FIGURE 1.
FIGURE 4 diagrammatically illustrates further exemplary embodiments of the metric element of FIGURE 1.
FIGURE 5 diagrammatically illustrates further exemplary embodiments of the metric element of FIGURE 1.
FIGURE 6 diagrammatically illustrates further exemplary embodiments of the metric element of FIGURE 1.
FIGURE 7 diagrammatically illustrates pertinent portions of exemplary embodiments of a transmitter for frequency channel communications according to the invention.
FIGURE 8 diagrammatically illustrates pertinent portions of exemplary embodiments of a transmitter for frequency channel communications according to the invention.
FIGURE 9 diagrammatically illustrates pertinent portions of exemplary embodiments of a transmitter for frequency channel communications according to the invention.

DETAILED DESCRIPTION

The documents listed below will be referred to hereinafter by the corresponding number shown below in square brackets to the left of the document.

[1] "Trellis shaping," G.D. Forney IEEE Trans. Inf., Vol. 38, March 1992.
[2] "Trellis Precoding: combined coding, precoding and shaping for intersymbol interference channels," M.V. Eyuboglu, G. D. Forney, IEEE Trans. Inf., Vol. 38, March 1992.
[3] "On optimal shaping of multidimensional constellations," R. Laroia, N. Farvardin, S.A. Tretter, IEEE Trans. Inf., Vol. 40, July 1994.

[4] "New automatic equalizer employing modulo arithmetic," M. Tomlinson, Electron. Lett., Vol. 7, pp. 138-139, March 1971.

[5] "Trellis Precoding: combined coding, precoding and shaping for intersymbol interference channels," M. V. Eyuboglu, G.D. Forney, IEEE Trans. Inf., Vol. 38, March 1992.

[6] "A simple and effective precoding scheme for noise whitening on intersymbol interference channels," R. Laroia, S.A. Tretter, N. Farvardin, IEEE Trans. Commun., October 1993.

[7] ITU-T Recommendation, V.34, September 1992.

[8] "More on Convolutional Spectral Shaping," V. Eyuboglu, V.pcm Rapporteur Meeting, La Jolla, CA, May 5-7, 1997.

[9] ITU-T Recommendation, V.90, September 1998.

FCC regulation part 68, for example, imposes a restriction on the transmitted power, when averaged on a 2 microsecond window. When the transmitted symbol rate is low, this might impose a restriction on each transmitted symbol, but as symbol rates increase, it is possible to select symbols such that, in each 2 microsecond window, the average power complies with the regulation. This may be done by using shaping (e.g. a variant of trellis shaping as in [1] or Convolutional spectral shaping as in [8]). The shaping operation permits the use of symbols that were not allowed by other methods (e.g. single symbol peak power constraints), which in turn results in better performance (e.g. higher throughput or better robustness to noise).

As indicated above, power constraints are often imposed in frequency bands that are close to or even within the frequency band of the desired transmission. For example, HAM bands in the 7MHz range are within the 4-10MHz frequency band used by HomePNA2.0. This problem arises also for VDSL. The aforementioned notch filter solution may introduce undesired inter-symbol interference (ISI), which in turn might degrade performance.

According to some embodiments of the invention, precoding (e.g. Tomlinson precoding as in [4] or Laroia precoding as in [6]) may be used before the notch filter to generate a spectrally shaped, non-ISI signal at the transmitter output. Other embodiments use a shaping technique (e.g. a variant of trellis shaping as in [1] or convolutional spectral shaping as in [8]) that imposes a spectral constraint on the designated HAM bands. In this manner, a sequence of transmitted symbols can be selected such that the power in the HAM bands is minimized.

Constellation shaping permits the stream of transmitted symbols in a communication system to be selected according to a criterion of minimum average power under the constraint of a given minimum distance between neighboring points. This "shapes" the constituent 2-dimensional constellation into a certain form (with a certain probability distribution between the constellation points). Thus, a symbol sequence with a lower average power (or alternatively a symbol sequence with a higher inter-symbol distance between neighboring points for a given power constraint) can be used. This results in "shaping gain" which can make the communication system more robust to noise and channel impairments, or result in higher achievable data-rates.

Two known methods of constellation shaping are trellis shaping as in [1] and shell mapping as in [3]. On Gaussian channels with inter-symbol interference (ISI), it is often desired to use precoding methods to mitigate channel distortion. Tomlinson-Harashima (TH) precoding as in [4] is a well known precoding scheme for ISI channels.

When constellation shaping is used in ISI channels, it can be advantageous to use a combination of shaping and precoding. A method of combining trellis shaping with TH-precoding, called trellis precoding, is described in [3]. Combining shell mapping with precoding can be done by incorporating Laroia precoding as described in [6]. In [1] and [2] it is shown that lattice codes can also be combined with trellis shaping and trellis precoding. Thus, trellis coded modulation (TCM) schemes can be combined with shaping and precoding to achieve coding gain together with shaping gain, and to have high performance even in ISI channels.

Lattice codes (e.g. TCM) can also be combined with shell mapping and Laroia precoding to achieve coding gain together with shaping gain, and to have high performance even in ISI channels. This is done, for example, in the ITU V.34 standard (see [7]) for voice grade modems.

In the ITU V.90 standard for voice grade modems (see [9]), convolutional spectral shaping as in [8] is used to spectrally shape the transmitted signal, or in other words, minimize the transmitted energy in predefined frequency bands. Notice that in the case of V.90 telephony modems, this band is the DC band (the requirement for minimizing the transmitter power results from the existence of transformers that stop the very low frequencies).

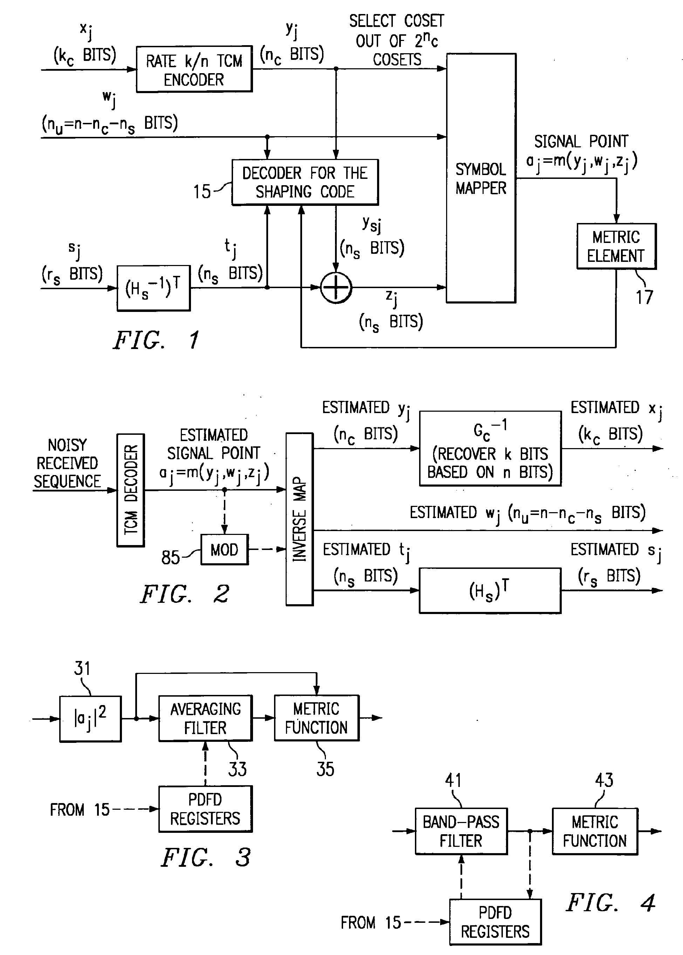

FIGURE 1 and FIGURE 2 respectively illustrate pertinent portions of exemplary embodiments of a transmitter and receiver for using trellis shaping for spectral management. Referring to FIGURE 1, the input sequence is divided into three parts ($x_j, w_j, s_j$). The first part, $x_j$, a binary $k_c$-tuple, is an input to an encoder for a rate $k_c/n_c$ TCM code (or other type of lattice code). The second part, $w_j$, is an uncoded binary $n_u$ tuple. The third part, $s_j$, a syndrome $r_s$-tuple, is an input to an $r_s$ input, $n_s$ output coset representative generator $(H^{-1}_s)^T$ for a rate $k_s/n_s$ convolutional shaping code, where $k_s=n_s-r_s$. The signals $t_j$, $w_j$ and $y_j$ are input to the decoder 15, whose output $y_{s,j}$ is summed with $t_j$ to produce $z_j$. The signals $w_j$, $y_j$ and $z_j$ are input to a symbol mapper. Except for the design of the metric element 17, the transmitter of FIGURE 1 can have a conventional design, for example, generally following section III(A) of [1]. The decoder element 15 can, in conventional fashion, use the metric information output by the metric element 17. Thus, when the decoder element is implemented using a Viterbi algorithm (VA), the metric element is implemented per each branch. The design of the metric element can vary according to the desired spectral management criteria.

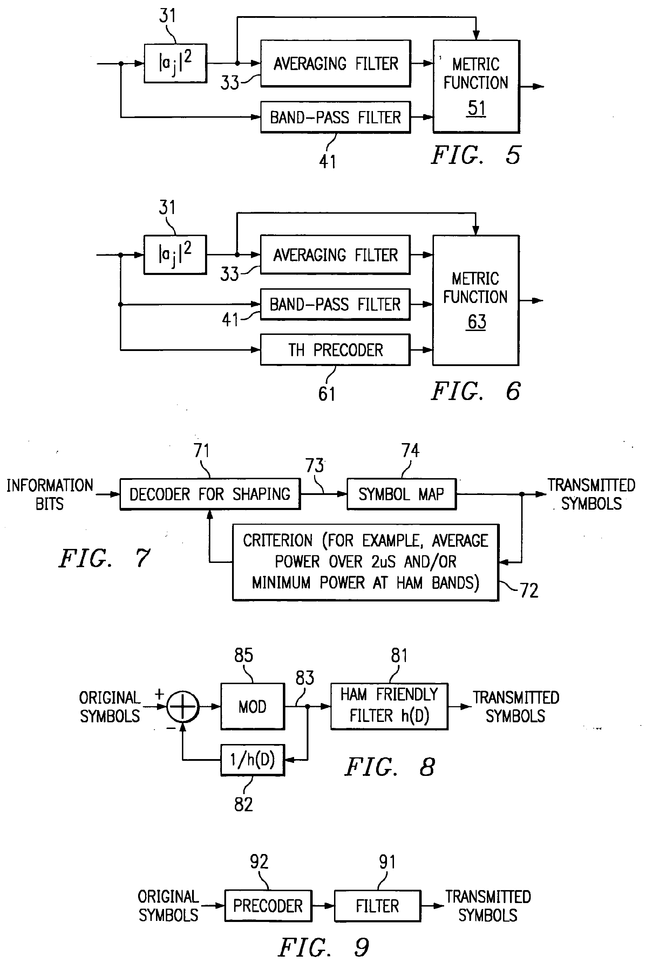

Referring to FIGURE 2, and with the exception of the broken line portion (discussed in more detail hereinbelow), the illustrated receiver of FIGURE 2 is conventional, and generally follows section III(C) of [1]. This receiver is operable in conventional fashion to receive (e.g. via conventional phone lines) communications from the transmitter of FIGURE 1 (and the transmitters of FIGUREs 7-9 below).

For complying with restrictions on transmitted power over a time-window, FIGURE 3 shows exemplary embodiments of the metric element 17 of FIGURE 1. The magnitude squaring element 31 squares the magnitude of the signal point $a_j$ produced by the symbol mapper of FIGURE 1, and thus calculates a measure of the transmit signal power. The averaging filter 33 may be given by:

$$avg_j = \frac{1}{N}\sum_{i=0}^{N-1}\left|a_{-i}\right|^2$$

where $N$ is the number of symbols used for the averaging function, and can be set according to the ratio between the time-window for the power constraint and the symbol interval. For example, if the symbol rate is 4Mbaud, compliance with FCC part 68 (2uSec window) yields $N$=8. The output of metric function 35 may be given by:

$$m_j = \begin{cases} \infty & avg_j \geq Threshold \\ \left|a_j\right|^2 & otherwise \end{cases}$$

where the Threshold value is set according to the power constraint.

The above example allows for trellis shaping, without permitting sequences of $N$ consecutive symbols to have an average power greater than the predefined threshold. Notice that setting the metric function output to infinity is equivalent to disconnecting certain branches in the Viterbi algorithm (VA) implemented by the decoder 15 of FIGURE 1. Further notice that for an averaging filter of length $N$, each state of the convolutional code associated with the VA of decoder 15 should be theoretically partitioned into $D^{(N1-)}$ states ($D$ being the constellation size), according to all possible combinations of the last $N$-1 symbols (that yield a different value for the filter output). This can in turn yield a complex VA at 15 in FIGURE 1.

To avoid such a complex VA, it is possible to use conventional reduced state sequence estimation (RSSE), for example parallel decision feedback decoding (PDFD, see [2]), i.e. to attach a shift register to every state of the decoder 15, each shift register holding the last $N$-1 symbol decisions associated with the corresponding state. Using these shift registers, the averaging filter output can be calculated, and negligible complexity enhancement is needed. Such a PDFD embodiment is shown by broken line in FIGURE 3.

In some embodiments according to FIGURE 3, a trellis shaped symbol sequence is obtained using 4 information bits per symbol (i.e., using a shaping constellation of 32-QAM), and an averaging filter with $N$ = 8.

For complying with restrictions on transmit power over a frequency band, an exemplary embodiment of metric element 17 is given in FIGURE 4. The output of the band pass filter 41 may be given by:

$$BPF_j = \sum_{i=0}^{L-1} b_i \; a_{j-i} - d \sum_{i=1}^{K-1} B_i \; PF_{j-i}$$

where $b, d, K$ and $L$ define the taps of the band pass filter. These tap parameters are set according to the frequency band in which the power constraint applies. The output of metric function 43 may be given by:

$$m_j = \left|PF_j\right|^2$$

The FIGURE 4 example allows for trellis shaping, wherein the power is calculated only in the frequency band in which the constraint applies. Notice that PDFD may also be used for implementing the BPF, by holding two registers attached to every state of decoder 15, the two registers of each state respectively holding the last **L-1** symbol decisions and the last **K-1** band pass filter outputs associated with the corresponding state. Using these shift registers, the BPF output can be calculated, and negligible complexity enhancement is needed. Such a PDFD embodiment is shown by broken line in FIGURE 4.

In some embodiments according to FIGURE 4, a trellis shaped symbol sequence is obtained using 4 information bits per symbol (i.e. using a shaping constellation of 32-QAM), and a 2nd order Butterworth band pass filter.

For complying with restrictions on both the transmitted power over a time-window as well as the transmitted power over a frequency band, an exemplary embodiment of metric element 17 is given in FIGURE 5. The exemplary metric element of FIGURE 5 includes the magnitude squaring element 31 and averaging filter 33 of FIGURE 3, and the band pass filter 41 of FIGURE 4. The output of metric function 51 may be given by:

$$m_j = \begin{cases} \infty & avg_j > Threshold \\ k_1 |a_j|^2 + k_2 BPF & otherwise \end{cases}$$

where the Threshold value is set according to the power constraint, and the weighted sum coefficients $k_1$ and $k_2$ are set according to the desired proportions between shaping according to overall power (see FIGURE 3) and shaping where the power is calculated only in the frequency band in which the constraint applies (see FIGURE 4). The aforementioned coefficients can be determined, for example, empirically based on experimental observation or simulation under expected operating conditions. The FIGURE 5 example allows for trellis shaping, without permitting sequences of $N$ consecutive symbols to have a power greater than the predefined threshold. Although not explicitly shown, the aforementioned use of PDFD registers is also applicable to the embodiments of FIGURE 5.

In some embodiments according to FIGURE 5, a trellis shaped symbol sequence is obtained using 4 information bits per symbol (i.e. using a shaping constellation of 32-QAM), an averaging filter with $N=8$, a 2nd order Butterworth band pass filter, and a metric function with $k_1=0.1$ and $k_2=1$.

Some exemplary embodiments of the metric element 17 of FIGURE 1 can also incorporate precoding (e.g., trellis precoding as in [2], using a TH-precoder). An exemplary metric element that incorporates precoding is shown in FIGURE 6. The metric element of FIGURE 6 includes a TH precoder 61, combined with the magnitude squaring element 31 and averaging filter 33 of FIGURE 3, and the band pass filter 41 of FIGURE 4.

The metric function 63 may be given by:

$$m_j = \begin{cases} \infty & avg_j > Threshold \\ k_4 |a_j|^2 + k_5 BPF + k_3 |TH_j|^2 & otherwise \end{cases}$$

where the Threshold value is set according to the power constraint, wherein the weighted sum coefficients $k_4, k_5$ and $k_3$ are set in a way that gives the desired proportions between (1) shaping according to overall power, (2) shaping where the power is calculated only in the frequency band in which the constraint applies, and (3) precoding, and wherein $TH_j$ is the precoder output. The aforementioned coefficients can be determined, for example, empirically based on experimental observation or simulation under expected operating conditions.

The FIGURE 6 example allows for trellis shaping, without permitting sequences of $N$ consecutive symbols to have a power greater than the predefined threshold.

Although not explicitly shown, the aforementioned use of PDFD registers is also applicable to the embodiments of FIGURE 6, including the TH precoder portion. The use of PDFD with a precoder is described in [2]. As demonstrated in [1], shaping may be combined with other schemes such as TCM, Turbo-TCM, and RS-coding.

FIGURE 7 diagrammatically illustrates pertinent portions of exemplary embodiments of a transmitter that uses shaping techniques in the manner described generally above according to the invention. The shaping device, for example decoder element 71, is controlled by a shaping controller 72 according to a desired criterion. In some embodiments the criterion (or criteria) can be implemented, for example, by a metric element such as one of the exemplary metric elements described above relative to FIGURES 3-6. In such embodiments, the metric functions 35, 43, 51 and 63 serve as control information determiners that determine what control information will be applied to the shaping decoder. Any desired shaping method, for example, trellis shaping (see [1]) or convolutional spectral shaping (see [8] and [9]), can be implemented at 71. As described above, the criterion (or criteria) of the metric element ensures that the shaping operation at 71 produces shaped information bits at 73 that result (after mapping at 74) in a transmitted symbol stream according to the defined requirement(s).

As discussed above, when restrictions on the transmitted power over certain frequency bands apply, a special (e.g. notch) filter can be used in the transmitter to attenuate the signal in these bands. Exemplary transmitter embodiments according to the invention can reduce the ISI effect of these filters by using TH precoding upstream of the filter.

A block diagram of exemplary transmitter embodiments according to the invention is shown in FIGURE 8. The ISI introduced by the transmitter filter (e.g., a filter with notches for HAM bands) 81 is dealt with in the transmitter itself, so the equivalent channel seen by the receiver is less severe. Furthermore, this reduces the error propagation phenomenon when the receiver employs a DFE (decision feedback equalizer). The precoding filter 82 can be tailored for use with the known impulse response of the filter 81. For example, as shown in FIGURE 8, filter 82 may be an estimate of the inverse (1/h(D)) of filter 81 (h(D)). In contrast. conventional applications of TH precoding typically tailor the precoder filter to the characteristics of the equivalent channel filter for the entire channel between transmitter and receiver.

In the transmitter of FIGURE 8, the transmitter signal will have notches in the desired bands, but ISI can be avoided due to the TH precoder. The TH precoder includes a modulo function at 85 to fold signal points back into the constellation (according to conventional TH precoder operation), so the precoded symbols at 83 are within the selected constellation. A corresponding modulo function would be implemented in conventional fashion at the receiver, as shown by broken line in FIGURE 2.

In other embodiments, different precoding schemes, e.g. Laroia precoding (see [6]), are used. This is shown generally in FIGURE 9, where precoding is applied at 92, upstream of a specialized filter 91 in the transmitter.

The above-described embodiments may be implemented in many cases where restrictions on the transmitted power in certain frequency bands apply, such as in HomePNA or VDSL. It will be apparent to workers in the art that these embodiments can be readily implemented, for example, by suitable modifications of software, hardware, or both, in conventional transmitters and receivers, such as HomePNA and VDSL transmitters and receivers.

Although exemplary embodiments of the invention are described above in detail, this does not limit the scope of the invention, which can be practiced in a variety of embodiments.

**Claims**

1. A transmitter apparatus for performing frequency channel transmissions in compliance with a transmission constraint, comprising:

   a shaping device (71) having an input for receiving digital communication information, said shaping device including a control input for receiving control information corresponding to the transmission constraint, said shaping device responsive to said control information for performing a constellation shaping operation on said communication information to produced shaped communication information;
   a symbol mapper (74) coupled to said shaping device for mapping said shaped communication information into a sequence of symbols for transmission across a frequency channel; and
   a shaping controller (72) coupled to said symbol mapper and said control input of said shaping device, said shaping controller responsive to said sequence of symbols for producing said control information for said shaping device,

   **characterized in that**:

   said shaping controller includes a band pass filter (41) for performing a band pass filter operation on the sequence of symbols to produce band pass-filtered information; and
   a metric element (63) is coupled to the output of said band pass filter for determining the power of said band pass-filtered information, and said control information includes said power of the band pass-filtered information.

2. The apparatus of Claim 1 wherein said shaping controller includes an averager for determining time-averaged transmit power information associated with the sequence of symbols, and a control information determiner coupled to said averager and responsive to said time-averaged transmit power information for determining said control information.

3. The apparatus of Claim 1, wherein said shaping controller includes a power calculator for calculating transmit power information associated with the sequence symbols, and said control information includes said transmit power information.

4. The apparatus of Claim 1 or 3, wherein a precoder is configured for performing a precoding operation on the sequence of symbols prior to filtering said sequence of symbols to produce precoded information, and said control information includes said precoded information.

5. A method for complying with a constraint on frequency channel transmissions, comprising:

in response to control information corresponding to the transmission constraint, performing a constellation shaping operation on communication information to produce shaped communication information;
mapping the shaped communication information into a sequence of symbols for transmission across a frequency channel; and **characterized by**
producing the control information by band pass-filtering the sequence of symbols, wherein transmit power in a frequency sub-band of the sequence of symbols is less than the transmission constraint.

6. The method of Claim 5, wherein said producing step includes performing a precoding operation on the sequence of symbols prior to filtering the sequence of symbols to produce precoded information, and wherein said control information includes the precoded information.

7. The method of claim 5 or 6, wherein said producing step includes calculating transmit power information associated with the sequence of symbols, and wherein said control information includes the transmit power information.

**Patentansprüche**

1. Sendervorrichtung zum Ausführen von Frequenzkanalübertragungen unter Berücksichtigung einer Übertragungsbeschränkung, mit:

einer Formungsvorrichtung (71), die einen Eingang zum Empfangen digitaler Kommunikationsinformationen und einen Steuereingang zum Empfangen von Steuerinformationen, die der Übertragungsbeschränkung entsprechen, aufweist und in Reaktion auf die Steuerinformationen eine Konstellationsformungsoperation an den Kommunikationsinformationen vornimmt, um geformte Kommunikationsinformationen zu erzeugen;
einer Symbolabbildungseinrichtung (74), die mit der Formungsvorrichtung gekoppelt ist, um die geformten Kommunikationsinformationen in eine Folge von Symbolen für die Übertragung auf einem Frequenzkanal abzubilden; und
einer Formungssteuereinheit (72), die mit der Symbolabbildungseinrichtung und mit dem Steuereingang der Formungsvorrichtung gekoppelt ist und in Reaktion auf die Folge von Symbolen die Steuerinformationen für die Formungsvorrichtung erzeugt,
**dadurch gekennzeichnet, dass**:

die Formungssteuereinheit ein Bandpassfilter (41) aufweist, um eine Bandpassfilteroperation an der Folge von Symbolen auszuführen, um bandpassgefilterte Informationen zu erzeugen; und
mit dem Ausgang des Bandpassfilters ein Meßelement (63) gekoppelt ist, um die Leistung der bandpassgefilterten Informationen zu bestimmen, wobei die Steuerinformationen die Leistung der bandpassgefilterten Informationen enthalten.

2. Vorrichtung nach Anspruch 1, bei der die Formungssteuereinheit eine Durchschnittsbildungseinrichtung, die zeitlich gemittelte Sendeleistungsinformationen bestimmt, die der Folge von Symbolen zugeordnet sind, und eine Steuerinformation-Bestimmungseinrichtung, die mit der Durchschnittsbildungseinrichtung gekoppelt ist und in Reaktion auf die zeitlich gemittelten Sendeleistungsinformationen die Steuerinformationen bestimmt, aufweist.

3. Vorrichtung nach Anspruch 1, bei der die Formungssteuereinheit eine Leistungsberechnungseinrichtung umfasst, die Sendeleistungsinformationen berechnet, die den Folgensymbolen zugeordnet sind, und bei der die Steuerinformationen die Sendeleistungsinformationen enthalten.

4. Vorrichtung nach Anspruch 1 oder 3, bei der eine Vorcodierungseinrichtung so konfiguriert ist, dass sie eine Vorcodierungsoperation an der Folge von Symbolen vor der Filterung der Folge von Symbolen ausführt, um vorcodierte Informationen zu erzeugen, und bei der die Steuerinformationen die vorcodierten Informationen enthalten.

5. Verfahren zum Berücksichtigen einer Beschränkung für Frequenzkanalübertragungen, das umfasst:

in Reaktion auf Steuerinformationen, die der Übertragungsbeschränkung entsprechen, Ausführen einer Konstellationsformungsoperation an Kommunikationsinformationen, um geformte Kommunikationsinformationen zu erzeugen; und

Abbilden der geformten Kommunikationsinformationen in eine Folge von Symbolen für die Übertragung auf einem Frequenzkanal;

**gekennzeichnet durch**:

Erzeugen der Steuerinformationen **durch** eine Bandpassfilterung der Folge von Symbolen, wobei eine Sendeleistung in einem Frequenzunterband der Folge von Symbolen niedriger als die Übertragungsbeschränkung ist.

6. Verfahren nach Anspruch 5, bei dem der Erzeugungsschritt das Ausführen einer Vorcodierungsoperation an der Folge von Symbolen vor der Filterung der Folge von Symbolen umfasst, um vorcodierte Informationen zu erzeugen, und bei dem die Steuerinformationen die vorcodierten Informationen enthalten.

7. Verfahren nach Anspruch 5 oder 6, bei dem der Erzeugungsschritt das Berechnen von Sendeleistungsinformationen, die der Folge von Symbolen zugeordnet sind, umfasst und bei dem die Steuerinformationen die Sendeleistungsinformationen enthalten.

## Revendications

1. Un dispositif émetteur pour accomplir des transmissions sur un canal de fréquence satisfaisant à une contrainte de transmission, comprenant :

un dispositif de mise en forme (71) ayant une entrée pour recevoir une information de communication numérique, ledit dispositif de mise en forme incluant une entrée de commande pour recevoir une information de commande correspondante à la contrainte De transmission, ledit dispositif de mise en forme réagissant à ladite information de commande pour accomplir une opération de mise en forme de constellation sur ladite information de communication, pour produire une information de communication mise en forme ;

un mappeur de symboles (74), couplé audit dispositif de mise en forme, pour mapper ladite information de communication mise en forme en une séquence de symboles pour une transmission sur un canal de fréquence ; et

un contrôleur de mise en forme (72) couplé audit mappeur de symboles et à ladite entrée de commande dudit dispositif de mise en forme, ledit contrôleur de mise en forme réagissant à ladite séquence de symboles pour produire ladite information de commande pour ledit dispositif de mise en forme, **caractérisé en ce que** :

ledit contrôleur de mise en forme comprend un filtre passe-bande (41) pour accomplir une opération de filtrage passe-bande sur la séquence de symboles, afin de produire une information ayant subi un filtrage passe-bande ; et

un élément métrique (63) est couplé à la sortie dudit filtre passe-bande, pour déterminer la puissance de ladite information ayant subi un filtrage passe-bande, et ladite information de commande comprend ladite puissance de l'information ayant subi un filtrage passe-bande.

2. Le dispositif selon la revendication 1, dans lequel ledit contrôleur de mise en forme comprend un moyenneur pour déterminer une information de puissance d'émission temporellement moyennée, associée à la séquence de symboles, et un déterminant d'informations de commande, couplé audit moyenneur et réagissant à ladite information de puissance d'émission temporellement moyennée, pour déterminer ladite information de commande.

3. Le dispositif selon la revendication 1, dans lequel ledit contrôleur de mise en forme comprend un calculateur de puissance pour calculer une information de puissance d'émission associée aux symboles de séquence, et ladite information de commande comprend ladite information de puissance d'émission.

4. Le dispositif selon la revendication 1 ou 3, dans lequel un précodeur est configuré pour accomplir une opération de précodage sur la séquence des symboles avant le filtrage de ladite séquence de symboles, afin de produire une information précodée, et ladite information de commande comprend ladite information précodée.

5. Un procédé pour satisfaire à une contrainte sur des transmissions à canal de fréquence, comprenant :

en réponse à l'information de commande, correspondant à la contrainte de transmission, accomplir une opération de mise en forme de constellation sur l'information de communication afin de produire une information de communication mise en forme ;

mapper l'information de communication mise en forme en une séquence de symboles pour une transmission sur un canal de fréquence, et **caractérisé par**

la production de l'information de commande par un filtrage passe-bande sur la séquence des symboles, dans laquelle la puissance de transmission dans une sous-bande de fréquences de la séquence de symboles est inférieure à la contrainte de transmission.

6. Le procédé selon la revendication 5, dans lequel ladite étape de production comprend l'accomplissement d'une opération de précodage sur la séquence de symboles avant le filtrage de la séquence de symboles afin de produire une information précodée, et dans lequel ladite information de commande comprend l'information précodée.

7. Le procédé selon la revendication 5 ou 6, dans lequel ladite étape de production inclut le calcul d'une information de puissance de transmission, associée à la séquence de symboles, et dans lequel ladite information de commande comprend l'information de puissance de transmission.

FIG. 1

FIG. 2

FIG. 3

FIG. 4

31

$|a_j|^2$

33 → AVERAGING FILTER → METRIC FUNCTION 51

BAND-PASS FILTER

41

*FIG. 5*

31

$|a_j|^2$

33 → AVERAGING FILTER → METRIC FUNCTION 63

41 → BAND-PASS FILTER

TH PRECODER

61

*FIG. 6*

INFORMATION BITS → DECODER FOR SHAPING 71 → 73 → SYMBOL MAP 74 → TRANSMITTED SYMBOLS

*FIG. 7*

CRITERION (FOR EXAMPLE, AVERAGE POWER OVER 2uS AND/OR MINIMUM POWER AT HAM BANDS) 72

ORIGINAL SYMBOLS → + ⊕ − → MOD 85 → 83 → HAM FRIENDLY FILTER h(D) 81 → TRANSMITTED SYMBOLS

1/h(D) 82

*FIG. 8*

ORIGINAL SYMBOLS → PRECODER 92 → FILTER 91 → TRANSMITTED SYMBOLS

*FIG. 9*